# EUROPEAN PATENT APPLICATION

(11) **EP 1 879 381 A2**
(43) Date of publication of application: **16.01.2008**
(21) Application number: 07252718.7
(22) Date of filing: 06.07.2007
(51) Int. Cl.: H04N 5/445

(54) **A system for and method of controlling advanced user interfaces for navigation**

(30) Priority: 12.07.2006 GB 0613863
(71) Applicant: British Broadcasting Corporation, London W1A 1AA (GB)
(72) Inventor: Hunter, Jeffrey, Dorking, Surrey RH4 3NT (GB); Poole, Christopher Edward, Reigate, Surrey RH2 9NY (GB)
(74) Representative: Reeve, Nicholas Edward

(57) **Abstract**

The present invention relates to a method of and system for controlling advanced user interfaces for navigation. Animated graphical sequences representing transitions between menu screens are pre-rendered and stored as audio/video clips that can then be played back when required to present the user interface. Options in the user interface that require user selection are rendered as part of a graphics overlay for the underlying video clips. In this way a professional quality user interface can be presented on a device that has limited graphics processing abilities. The audio/video clip may be pre stored in the device, downloaded as one or more data files or acquired from a broadcast stream.

## Description

The present invention relates to a system for and a method of controlling advanced user interfaces for navigation, and in particular to systems and methods for use in interactive television applications.

Many different software technologies are currently used to support interactive television applications but in almost all deployments to date they sit on top of a hardware platform primarily built for the presentation of real-time, high quality video and audio. This is because the nature of the software and hardware technology deployed in digital television platforms has been strongly influenced by the business models of digital television. To date few, if any, digital television platforms have been deployed with interactive television as a primary consideration. Instead, the ability to support interactive television has been a convenient secondary benefit enabled by the technologies required to meet the primary requirement of promoting and delivering linear audio/video (AV) programming. This has meant that interactive television has had to fit itself around the available technology and what is possible is typically constrained in two main ways: first, the underlying receiver hardware renders video and other graphics separately, overlaying the latter on the former as downstream processing; second a considerable amount of the receiver's processing power is present in hardware dedicated to the decoding of video. The processing power available for rendering overlay graphics is limited by comparison.

These constraints can limit the professional quality and richness of the interactive elements, that is those that change in response to viewer interaction, of any presentation. This is starting to become an issue given an audience whose expectations are becoming increasingly raised by the capabilities of considerably more powerful personal computing (PC) and games platforms.

One obvious way to address this is to increase the graphics rendering capability within the receiver. This could be in the form of generic processing hardware as found in a PC. Or it could be specific graphics rendering hardware as found in a games console. However, the relatively high cost of such hardware makes this approach not economically viable for certain target devices. Further, even where hardware of this nature can be adopted, the specific hardware or the programming interface used to control it may vary between target devices. This can make the porting of a particular user interface to different target devices an expensive and time-consuming task for content providers.

Another way to address this is to adopt a distributed computing approach and render graphics on hardware sited with the content provider or platform operator. The rendered output is generated on this hardware in response to input received from the user via some kind of return path. The rendered output can then be delivered back to the user as if it were just another broadcast AV stream, such that there is no need for significant graphics rendering capability within the receiver. However, such a solution is only possible on a platform that supports a return-path, for the backhaul of user input. Further, such a platform must have sufficient rendering capacity in the head-end and delivery capacity in the forward path to the target device so as to be able to concurrently support a unique broadcast AV stream for each active user at periods of high demand. Finally the overall latency, formed from the time taken to backhaul user input, render graphics in response to this, encode the rendered graphics and deliver them back to the particular user, must be sufficiently low so as to provide a sufficiently response "feel" to the user interface.

We have therefore appreciated that there is a need for a system and method of controlling or presenting advanced user interfaces for navigation that does not require a powerful graphics processing capability in the user receiving device.

### Summary of the Invention

The invention is defined in the Independent claims to which reference should now be made. Advantageous features are set forth in the dependent claims.

### Brief Description of the Drawings

A preferred embodiment of the invention will now be described by way of example and with reference to the drawings in which:
Figure 1 is an illustration of a preferred display device for use with the invention;
Figure 2 is an illustration of AV clips making up a part of an example user interface; and
Figure 3 is an illustration of the combination of AV clip and graphics overlay making up a screen in the user interface shown in Figure 2.

### Detailed Description of the Preferred Embodiments

The preferred embodiment of the invention provides an interactive application running on an interactive television device with access to a set of pre-rendered graphical sequences stored as audio/video (AV) clips. Each graphical sequence represents an animation that is to be presented to a user when a potential navigational step in a user interface occurs. A sequence of AV clips may be seamlessly presented under the control of the interactive application; by considering any received user input when determining the AV clip to be presented next the interactive application can create the illusion of a dynamically rendered user interface that changes in response to viewer interaction.

A preferred embodiment of the invention will now be described with reference to the figures.

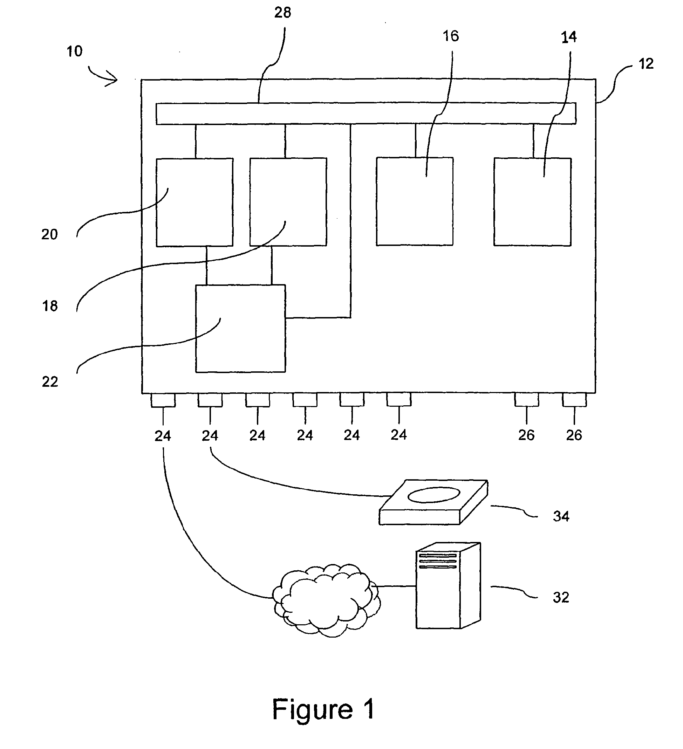

Figure 1 illustrates an interactive television receiver 10, having a housing 12 accommodating a memory 14, a processor 16, a video decoder 18, an overlay graphics renderer 20, a compositor 22, a bank of input terminals 24 and one or more output terminals 26. A data bus 28 connects the respective terminals to the processor, video decoder, graphics renderer, compositor and memory, and is operated under the control of software stored in the processor.

The input terminals 24 provide a plurality of connection points for receiving data from an external source. One or more of the input terminals may for example be arranged to receive data from one or more broadcasters, such as audio, video, image and text data, as well as application code. Such input terminals may therefore be connected to an external antenna or aerial, to a cable television connection, or other appropriate means for delivering television programme content, including one-to-one and one-to-many delivery over an IP connection.

Alternatively, an integral antenna may be provided within the housing or mounted on the exterior.

Other input terminals may also be available for connection to further sources of data, accessible via a uni-directional or more commonly a bi-directional, data connection. Such a source may be remote, such as a file server, accessible via a public data network such as the Internet 32, or via a private data network such as the return path of a cable television system. Alternatively, it may be a local data source, such as a personal computer, external hard disk drive 34, a DVD drive, a removable memory device, a mobile phone or digital assistant, games console and so on, accessible via a dedicated connection between the receiver and the local data source or via a shared local network.

In addition to external data access, either local or remote, data may be accessed from an internal source such as an internal hard disk drive, DVD drive or other memory cache.

The set of pre-rendered AV clips that comprise a particular user interface may be acquired using one or more of the above means as available and stored within the receiver prior to use. Alternatively, where a suitable connection is available each AV clip from the set may be accessed on-demand as required. It is also possible to use a combination of the two methods. In any event, it will be appreciated that there will be a repository of AV clips, either locally on the device, in a remote location such as a server, or both.

An application running on the receiver is able to instruct the processor to arrange for a specific AV clip to be sent to the video decoder for decoding. This AV clip may be obtained from memory within the receiver or it may be obtained from a source external to the receiver as described above. The application may also instruct specific overlay graphics to be rendered by the graphics renderer. The output of these two stages will be merged by the compositor for presentation to the viewer via one of the output terminals. In keeping with the general execution of such an application these instructions may be issued in response to user input captured by a variety of means.

The join between successive AV clips may be made seamless if the last frame of an AV clip is identical (or at least close) to the first frame for any AV clip representing a potential subsequent navigational step, of which there may be more than one. At the end of any navigational step it may also be necessary to continue to present the last frame of the relevant AV clip whilst waiting for further user input or some other stimuli.

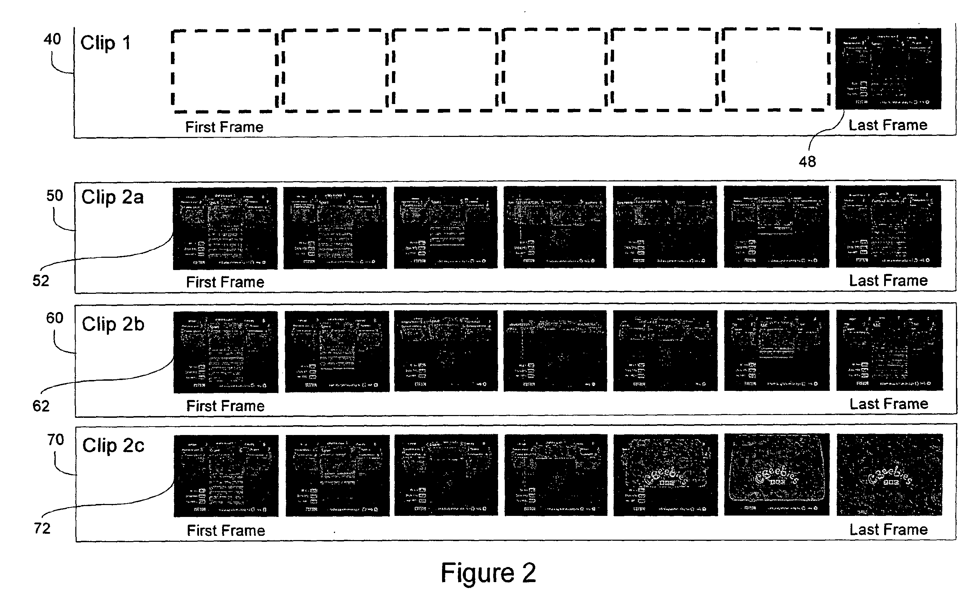

This is illustrated in Figure 2, which shows a number of AV clips corresponding to some of the navigational steps in a user interface allowing the viewer to browse and select television programmes.

In this example, the user interface presented is a rotatable carousel of screens or cards, each corresponding to a category or genre of programme. Categories may include sports, current affairs, documentaries, dramas, and soap operas for example. The screens or cards may be rotated by a user, operating a control device such as a remote control, until a desired category is foremost. For example, the rotation may occur when a viewer operates the left and right arrow buttons. The other screens or cards behind are displayed at a smaller size and in a somewhat duller colour, so that the foremost screen is highlighted. When a screen or card reaches the foremost position and stops, a drop-down list emerges beneath it on which a selection of different programmes in that category is presented. By operating the control device, the viewer may then select a programme from the list for viewing. The selection of a programme may be made with the up and down arrows, and operation of an Enter or Select key.

In this example, rendering the graphics to display the rotation of the carousel is processor intensive. In order that such graphics can be presented on the interactive television device, the displayed movement of the carousel that occurs as navigational steps in the interface are taken is represented as a number of separate AV clips to be played back in the appropriate sequence.

Clip 1 40 corresponds to a navigation step that leads to the presentation of television programmes of the genre "Sport". Once presentation of this AV clip has reached the end, the last frame 48 will continue to be presented until presentation of the next AV clip starts. From this state in the user interface there are a number of potential navigation steps.

Clip 2a 50 corresponds to a navigation step that transitions from the presentation of a list of available television programmes of the genre "Sport" to presentation of a list of available television programmes of the genre "Current Affairs". The first frame of this AV clip 52 is the same as the last frame of Clip 1.

Clip 2b 60 corresponds to a navigation step that transitions from the presentation of a list of available television programmes by genre to presentation of a list of available television programmes categorised alphabetically by title. Again, the first frame of this AV clip 62 is the same as the last frame of Clip 1.

Clip 2c 70 corresponds to a navigation step that transitions from the presentation of a list of available television programmes of the genre "Sport" to viewing a specific television programme from this list, in this case related to the television service "CBeebies". Again, the first frame of this AV clip 72 is the same as the last frame of Clip 1.

Thus, each transition of the carousel, such as rotations, zooms or flipping of the cards, can be created as a separate AV clip to be triggered in response to remote key presses. Some transitions, such as a preview of the different genres available may loop continuously until a key is pressed. Preferably, as indicated in clip 2c, individual programmes appear from behind the screen through a zoom transaction when a programme is selected to watch.

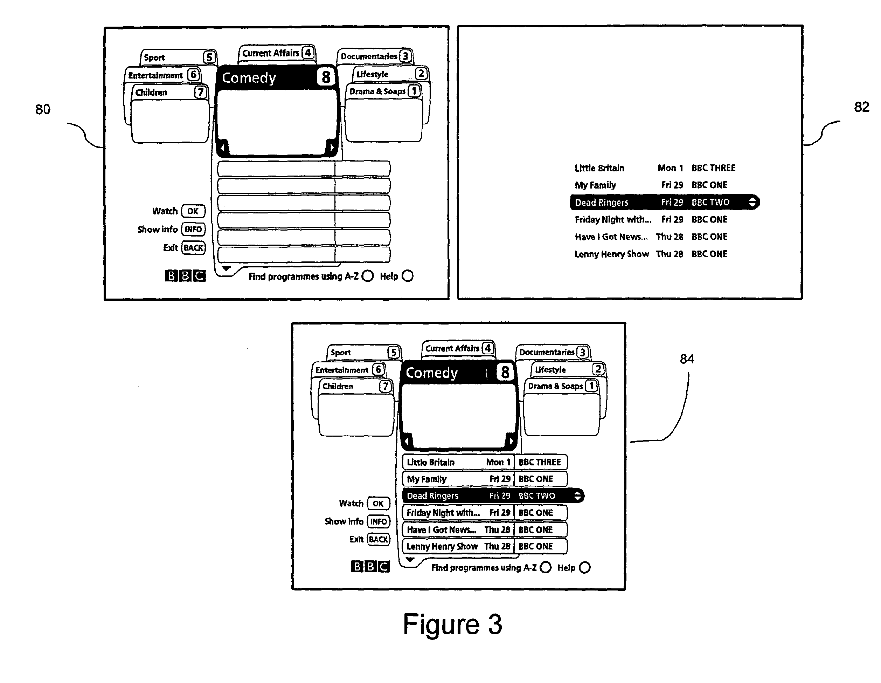

Some navigational steps will not always be present, but will depend on other circumstances, such as what programmes are available at a given time. By their nature, it is difficult to predict these navigational steps in advance, which means that they are not included as part of a pre-rendered AV clip. Instead, such navigational steps are represented as overlay graphics which can be rendered dynamically within the interactive television device under the control of the interactive application. Such graphics are composited with the video so that they blend together and appear to be a single user interface. Preferably, therefore the end frame of an AV clip remains visible after the clip has terminated so that it forms the background for the graphics overlay. This is illustrated in Figure 3, which shows a frame from an AV clip 80, and graphics rendered by the interactive television device 82 and the resulting presentation to the viewer when the two are composited 84.

The rendered graphics represent a list of available television programmes that will vary by time, and potentially by viewer, and so cannot be included in the pre-rendered AV clip. The compositing process occurs so that the titles of the television programmes are laid onto a number of discrete bars that 'drop-down' from the card or screen shown in the rotatable carousel. A selection bar may also be displayed as party of the graphical overlay to indicate which of the options is currently highlighted for selection.

If more television programmes are available than can be accommodated within the option bars presented in the AV clip, then the graphical overlay may comprises a scrollable menu presenting only that number of options that can be accommodated within the appearance of the screen. A scroll bar may also be displayed to one side of the bars so that the number of menu options that are off-screen can also be understood by the user.

Some options that do not vary, such as general commands, may also be presented as part of the AV clip. In Figure 3, the 'Watch', 'Info', 'Exit', 'Help' and 'Search' commands are displayed by means of the AV clip, rather than the graphical overlay.

The menu interface illustrated in the figures is only an example and other designs, or layouts could also be used. What is significant, is that where the rendering of such menu interfaces would be a burden on the processor in the interactive television device, the menu can be implemented as a combination of an AV clips and a graphical overlay. Furthermore, new or updated user interfaces may always be downloaded on demand or automatically allowing the user or the provider of the device to customise the interface.

The display and removal of the overlay graphics are preferably synchronised with the start and end points of the video transitions. However graphics may also be presented mid AV clip, if desired. To achieve this the interactive television device may provide a means by which the application can request that overlay graphics appear or disappear when a specific point in the AV clip is being presented. However, where this is not the case the presentation of overlay graphics may need to occur under direct application control. In such circumstances it is preferable that the interactive television device provides the application with an indication of when it has actually started to present the AV clip as opposed to the application assuming this to be co-incident with a request to start presentation of the AV clip. There is likely to be some latency between the two, and this may either be unknown or variable.

The actual form that the AV clips take will be dependent on the video processing provided by the interactive television devices in each target platform. However, the number of widely adopted AV coding formats is relatively limited, with certain formats, such as MPEG-2 and MPEG-4 having significant market penetration. Furthermore, the ability to transcode from one AV coding format to another is a relative commodity that may be achieved both comparatively cheaply and in real-time. In this sense a user interface implemented in such formats can be highly portable and is therefore preferred. This compares favourably with dynamic rendering on the interactive television device itself, since the software for this may need to be highly tailored to each target platform, potentially making porting an expensive and time-consuming task.

For any AV clip that is only to be presented from its start and in its entirety there is no need to support random access, such as is required for a linear broadcast stream. This can allow a more efficient encoding to be applied, which can reduce the size of the AV clip in bytes leading to a corresponding reduction in the time taken to acquire. For example, if MPEG-2 video coding is used then a "long GOP" approach can be adopted.

The generation and encoding of each AV clip may need to take into account practical aspects of the target device. For example, some AV coding formats make use of buffering during the decode process. For broadcast streams this is not normally a problem as the input coded stream is continuous. However, an AV clip is discrete and it is possible for the coded data at the end of the AV clip to get stuck in the buffer as there is no following data to push it through. This can lead to a premature end to presentation of the AV clip, with the last video frame or so not presented. This can be avoided if the target device detects this situation and explicitly flushes any buffers in the decoding stage. However, where the target device does not provide this functionality the problem can be avoided by adding a few extra frames to the end of the AV clip that are duplicates of the last frame of the original AV clip. These extra frames help to flush the input data through the buffering in the decoding stage to ensure that the graphical sequence is presented even if the end of the AV clip is not fully decoded. The number of extra frames to be appended will depend on the extent of buffering in the decoding stage of target devices. The use of duplicate frames, as opposed to say an easier to encode black frame, means that the coded AV clip is tolerant of variability in the buffering that could lead to the presentation of one or more of the extra frames.

As described previously the set of AV clips that comprise a particular user interface may be acquired using one or more means as available and stored within the receiver prior to use. Alternatively, where a suitable connection is available each AV clip from the set may be accessed on-demand as required. It is also possible to use a combination of the two methods. However, for any solution reliant on downloading on-demand it can be difficult to ensure the consistency of the user experience due to variable latency in the download depending on the loading on the remote server and delivery network at the time.

The transmission of AV clips within a broadcast stream can be achieved in a number of ways. One mechanism that can be used is to deliver the AV clips in a payload of discrete data files, using any convenient data delivery protocol. In such scenarios it is usual for the transmission of each data file to be repeated to maximise the chances of a complete and error free acquisition by the target device. This provides a means to deal with any loss of data due to gaps or errors in the received broadcast stream or limited input data throughput within the target device. This mechanism is attractive in that it preserves each AV clip as a discrete item, making the location of the start of the AV clip and detection of its end straightforward.

Another mechanism for the transmission of AV clips within a broadcast stream is to concatenate a number of AV clips into a single AV sequence. Preferably, such clips are arranged to form a coherent and complete grouping. This AV sequence is then transmitted as a linear AV stream using the same mechanism as for a standard broadcast television service. This allows the AV sequence to be acquired as if it were just another broadcast television programme. This can be advantageous since in some target devices the relevant path from input terminal to internal storage is optimised in terms of data throughput. This allows higher transmission data rates to be used without risk of input data loss due to lack of throughput, with the potential for reduced acquisition times. This mechanism does require a means of locating specific points within the acquired AV sequence corresponding to the start and end points of a particular AV clip. This can be achieved by placing specific markers in the AV sequence or by reference to a more generic signalling, such as timecode synchronised with the AV sequence.

When acquiring the AV clips using any of the methods previously described there may be advantages in grouping two or more AV clips into an atomic acquisition item, i,e, one that must be acquired in its entirety before any of its payload may be accessed by the target device. This provides a means to group AV clips corresponding to a particular part of the user interface, so increasing the likelihood that the AV clip corresponding to the next navigational step is already downloaded, so resulting in a more responsive "feel". It also allows updates to part or all of the user interface to be managed in a coherent manner.

In the examples so far, the interface has been described for use on an interactive television platform. However, it will be appreciated that embodiments of the invention can be used on any device where a professional user interface is desired, but graphics processing resources are limited or need to be conserved. Such devices may be mobile phones, PDAs, portable music or video players and so on.

Although, the user interface has been described as comprising AV clips, it will be appreciated that the AV clip could contain no audio and therefore comprise a silent video clip.

## Claims

1. A method of controlling a navigational user interface on a display device, the interface having a plurality of menu screens with menu options that vary dynamically depending on content that is available for viewing; the method comprising;
detecting a user menu selection for navigation between menu screens;
accessing a repository in which a plurality of animated graphical sequences rendered as respective AV clips are stored, each sequence corresponding to at least part of animation of the user interface that occurs when a selection is made from a menu screen;
obtaining an AV clip depending on the menu selected and displaying the AV clip on the display device;
generating a graphical overlay for the menu having menu options that depend on the audio/video content that is available for viewing; and
combining the graphical overlay with the AV clip to form a final menu screen for presentation to the user.

2. The method of claim 1 comprising storing the AV clips in a memory associated with the display device.

3. The method of claim 1 or 2, comprising storing the AV clips in a server accessible over a network, and downloading the AV clip for navigation to the menu screen as required.

4. The method of claim 1 or 2, comprising acquiring the AV clips from a broadcast stream.

5. The method of claim 4, wherein the AV clips are delivered as a set of discrete data files transmitted as a data stream within the broadcast stream, wherein a data file is arranged to convey a single AV clip.

6. The method of claim 4 or 5, wherein the AV clips are delivered as a set of discrete data files transmitted as a data stream within the broadcast stream, wherein a data file may is arranged to convey two or more AV clips, such that they can be acquired as a single grouping.

7. The method of any of claims 4 to 6, wherein each data file is arranged to be transmitted more than once.

8. The method of claim 4, wherein a plurality of AV clips are concatenated into a single AV sequence transmitted as a linear AV stream within the broadcast stream.

9. The method of claim 8, wherein the linear AV stream is broadcast using the same mechanism as for a standard broadcast television service.

10. The method of claim 8 or 9, wherein the transmitted AV sequence contains signalling that allows each constituent AV clip to be identified and extracted as required.

11. The method of any preceding claim, comprising providing animated graphical sequences in the repository that represent a transition from one menu screen to another menu screen.

12. The method of any preceding claim, comprising providing animated graphical sequences in the repository that separately represent a transition from a menu screen to a point intermediate between menu screens, and a transition from the intermediate point to another menu screen.

13. The method of any preceding claim, wherein the starting frame of one AV clips is substantially the same as the final frame of another AV clip.

14. The method of any preceding claim, comprising providing an animated graphical sequence corresponding to a transition between the user interface screen and the display of audio/video content, for display when the audio/video content is selected from a menu.

15. The method of any preceding claim comprising freezing the final frame of the AV clip to form the background of the menu screen.

16. The method of any preceding claim comprising when decoding and playing back the AV clip on the display device, flushing buffers present within the display device to ensure that the final frame of the AV clip is displayed.

17. The method of any of claims 1 to 15, wherein a number of extra frames are provided between the final frame of the graphical sequence and the end of the AV clip, where the extra frames are duplicates of the final frame of the graphical sequence.

18. The method of any preceding claim wherein the display device is an interactive television receiver.

19. A system for controlling a navigational user interface on a display device, the interface having a plurality of menu screens with menu options that vary dynamically depending on content that is available for viewing; the system comprising;
a display device;
a sensor for detecting a user menu selection for navigation to a menu screen;
a connection to a repository in which a plurality of animated graphical sequences rendered as respective AV clips are stored, each sequence representing at least part of a transition to a menu screen;
a processor configured to:
obtain an AV clip depending on the menu selected and display the AV clip on the display device;
generate a graphical overlay for the menu having menu options that depend on the audio/video content that is available for viewing; and
combine the graphical overlay with the AV clip to form a final menu screen for presentation to the user.

20. A computer readable medium having computer program code stored thereon for controlling a navigational use interface on a display device, the interface having a plurality of menu screens with menu options that vary dynamically depending on content that is available for viewing, wherein when the computer program code is executed by the processor, the processor performs the steps of any of method claims 1 to 17.

21. A user interface having a plurality of menu screens with menu options that vary dynamically depending on content that is available for viewing, wherein the user interface is configured to perform the steps of any of method claims 1 to 17.
